# DEMANDE DE BREVET EUROPEEN

(11) **EP 1 586 236 A1**
(43) Date de publication de la demande: **19.10.2005**
(21) Numéro de dépôt: 05364007.4
(22) Date de dépôt: 24.01.2005
(51) Int. Cl.: A01J 15/12, B01F 7/00, B29C 47/00

(54) **Procédé et dispositif d'amélioration de la tartinabilité du beurre**

(30) Priorité: 27.01.2004 FR 0400729
(71) Demandeur: Delerue, Sylvain, 35200 Rennes (FR)
(72) Inventeur: Delerue, Sylvain, 35200 Rennes (FR)

(57) **Abrégé**

L'invention concerne un procédé et un dispositif de transformation en continu d'un beurre dit "normal" en beurre dont la tartinabilité est améliorée, dit "beurre aisément tartinable".

Ce dispositif est remarquable en ce qu'il comprend :
- des moyens (2) d'amenée et de compression de beurre normal à l'intérieur d'un dispositif de cristallisation (3),
- des moyens (3) de cristallisation accélérée comprenant une pluralité de filières (30) d'extrusion du beurre dont les parois (31) présentant au moins un épaulement intérieur (32), de sorte que l'aire de la section transversale de chaque filière (30) diminue après chaque épaulement (32) par rapport au sens d'écoulement du beurre et que la pression de celui-ci diminue, les parois (31) de ces filières (30) étant refroidies par des moyens de refroidissement (33),
- des moyens (4) de décristallisation dudit beurre cristallisé pour obtenir du beurre aisément tartinable.

## Description

La présente invention concerne un procédé de transformation en continu d'un beurre faiblement tartinable en beurre dont la tartinabilité est améliorée, ainsi qu'un dispositif pour la mise en oeuvre de ce procédé.

Le beurre est un produit alimentaire obtenu par la maturation de la crème issue du lait de façon à la cristalliser et les globules gras, puis par le barattage intensif de cette crème. Le barattage a pour objectif de briser ces globules gras et de séparer la phase aqueuse ou babeurre de la phase grasse ou beurre.

Ces étapes sont effectuées soit dans une baratte tonneau lors d'une fabrication dite "artisanale", soit dans un butyrateur dans le cas d'une fabrication industrielle.

Un butyrateur permet de fabriquer du beurre en continu, c'est-à-dire que la crème pénètre à une extrémité de la machine et que le beurre ressort à l'autre extrémité sous forme d'un boudin qui est ensuite conditionné en plaquettes.

Le beurre ainsi obtenu présente de bonnes caractéristiques gustatives mais une tartinabilité médiocre.

La notion de « tartinabilité » se définit comme étant l'aptitude du beurre à s'étaler. Elle se mesure à l'aide d'un pénétromètre qui détermine la résistance d'un corps à la pénétration.

Or, le beurre est un produit de grande consommation qui pour des raisons d'hygiène doit être conservé au réfrigérateur.

En conséquence, lorsque le consommateur le sort du réfrigérateur, il est trop dur pour pouvoir être tartiné immédiatement.

Les enquêtes de consommation montrent que le consommateur souhaiterait avoir un beurre facilement tartinable dès sa sortie du réfrigérateur, c'est-à-dire alors qu'il se trouve encore à une température comprise entre 4 et 6°C, sans avoir à attendre que le beurre se réchauffe.

On connaît déjà sur le marché plusieurs produits présentant une bonne tartinabilité à ces températures : la margarine, le beurre allégé et un beurre aisément tartinable connu sous la marque déposée de "beurre tendre".

La margarine est fabriquée à partir d'huile hydrogénée. Elle présente l'avantage pour le consommateur de ne pas durcir au réfrigérateur et accessoirement de ne pas contenir de cholestérol, mais elle présente un goût très éloigné de celui du beurre.

Le beurre allégé est constitué de 25 % ou de 40% de matière grasse laitière et pour le reste d'eau, d'amidon et de plusieurs additifs. Il est actuellement peu fabriqué car il nécessite une réorganisation des usines de fabrication du beurre. De plus, même s'il est présenté comme un produit allégé donc meilleur pour la santé, il manque également de goût.

Enfin, le "beurre tendre" présente l'avantage de conserver le goût du beurre "classique" tout en étant onctueux et aisément tartinable dès sa sortie du réfrigérateur.

Une première technique de fabrication de ce beurre aisément tartinable consiste à modifier la proportion des différents acides gras présents dans la crème de départ par l'ajout d'acide oléique, ce qui a pour effet d'abaisser le point de fusion du beurre obtenu.

Une seconde technique actuellement utilisée est un procédé discontinu qui consiste à prendre du beurre, dénommé ci-après "beurre dur", obtenu à l'issue d'un procédé de fabrication courant, à le découper en cubes d'environ 25 kg et à placer ces cubes au congélateur à -18°C pendant sept à huit jours. On réchauffe ensuite ces cubes de beurre pour les ramener à une température moyenne comprise entre 0 et 15°C afin de pouvoir les introduire dans un malaxeur où ils sont pétris jusqu'à présenter les caractéristiques de tartinabilité d'un beurre aisément tartinable.

Ce procédé de production discontinue présente l'inconvénient d'être long puisqu'il nécessite un stockage du beurre pendant une semaine et coûteux puisqu'il entraîne l'immobilisation de congélateurs et d'un stock de marchandises pendant des périodes longues. Le prix de revient du "beurre aisément tartinable" ainsi obtenu est donc élevé et ce type de beurre reste un produit haut de gamme.

De plus, ce procédé discontinu suppose de nombreuses manipulations du beurre depuis sa sortie du butyrateur jusqu'à l'emballage du produit fini et ces manipulations sont une source potentielle de contamination bactérienne.

On connaît déjà d'après le document FR 1 461 891 un procédé et un dispositif permettant le refroidissement du beurre au cours de sa fabrication.

La fabrication du beurre dans un butyrateur conduit au réchauffement de celui-ci tout au long du procédé. Pour résoudre ce problème, la plupart des butyrateurs sont équipés d'une double enveloppe à l'intérieur de laquelle circule un fluide réfrigérant. Malgré l'existence de ces moyens de refroidissement le beurre est encore chaud lorsqu'il sort du butyrateur et son refroidissement dans un réfrigérateur est long.

Le dispositif décrit dans le document précité à pour but de pallier cet inconvénient et de fournir un dispositif permettant de refroidir le beurre en sortie de butyrateur pour l'amener à une température qui réduit son temps de passage dans le réfrigérateur. Ce dispositif comprend un échangeur de chaleur et des moyens d'homogénéisation de la température.

L'échangeur de chaleur est constitué d'une plaque perforée au travers de laquelle s'écoule le beurre, cette plaque étant refroidie par une canalisation de circulation d'un fluide réfrigérant. Un malaxeur à pales placé en sortie de l'échangeur de chaleur permet de brasser les boudins de beurre refroidis et d'homogénéiser la température finale du beurre obtenu.

Un tel dispositif n'a toutefois absolument pas pour objectif d'obtenir un beurre aisément tartinable dès sa sortie du réfrigérateur.

La présente invention a pour but de fournir un procédé d'amélioration de la tartinabilité du beurre fonctionnant en mode continu et permettant d'obtenir du "beurre aisément tartinable" de façon plus rapide et donc moins onéreuse que par le procédé connu de l'état de la technique.

A cet effet, l'invention concerne un procédé de transformation en continu d'un beurre dit "normal" en beurre dont la tartinabilité est améliorée, dit "beurre aisément tartinable", caractérisé en ce qu'il comprend les étapes successives suivantes consistant à :
a) comprimer le beurre normal pour l'amener d'une pression initiale à une pression maximale,
b) soumettre le beurre ainsi comprimé se trouvant à une température maximale à une opération de cristallisation accélérée par diminution de sa pression et de sa température, pour l'amener à une pression finale inférieure à la pression maximale et à une température de fin de cristallisation inférieure à ladite température maximale,
c) décristalliser ce beurre cristallisé par une action mécanique de façon à obtenir ledit beurre aisément tartinable à une température finale supérieure à la température de fin de cristallisation.

Dans la suite de la description et des revendications, le terme beurre "normal" désigne du beurre tel qu'on l'obtient après un procédé de fabrication classique à la sortie d'un butyrateur, d'une baratte-tonneau ou d'un silo de stockage temporaire ou tel que l'on prélève sur une chaîne de fabrication avant son passage dans une machine de conditionnement.

Ce beurre dit "normal" présente à ce stade une texture relativement molle. Sans traitement particulier, et après un passage de 7 jours au réfrigérateur avant sa commercialisation, obligatoire pour respecter les normes sanitaires, il présente une tartinabilité médiocre lorsque le consommateur le sort de son réfrigérateur, c'est-à-dire à une température comprise entre 4 et 6°C.

Lorsque ce beurre dit "normal" est au contraire traité selon le procédé conforme à l'invention avant le passage obligatoire au réfrigérateur pendant 7 jours, il présente ultérieurement une tartinabilité améliorée lorsque le consommateur le sort de son réfrigérateur et il conserve dans le temps cette tartinabilité améliorée.

Selon d'autres caractéristiques avantageuses et non limitatives de l'invention prises seules ou en combinaison :
- la pression maximale est comprise entre 15. 10⁵ et 20.10⁵ Pa environ et la pression finale entre 1. 10⁵ et 3.10⁵ Pa environ, la température maximale est comprise entre 13 et 18°C environ et la température de fin de cristallisation entre -12 et -20°C environ.
- la diminution de la pression et de la température du beurre au cours de l'étape b) de cristallisation accélérée comprend au moins un palier intermédiaire pendant lequel la température dite "intermédiaire" et/ou la pression dite "intermédiaire" sont constantes ;
- les paliers de pression intermédiaire constante sont compris respectivement entre 8. 10⁵ et 12.10⁵ Pa et entre 3. 10⁵ et 7.10⁵ Pa et les paliers de température intermédiaire constante sont respectivement compris entre 2 et 8°C et entre -2 et -8°C ;
- l'étape c) de décristallisation est effectuée par cisaillement mécanique du beurre cristallisé.

L'invention concerne également un dispositif d'amélioration de la tartinabilité du beurre fonctionnant en continu, permettant la mise en oeuvre du procédé précité. Ce dispositif comprend :
- des moyens d'amenée et de compression de beurre dit "normal" à l'intérieur d'un dispositif de cristallisation ;
- des moyens de cristallisation accélérée comprenant une pluralité de filières d'extrusion du beurre dont les parois présentent au moins un épaulement intérieur, de sorte que l'aire de la section transversale de chaque filière diminue après chaque épaulement par rapport au sens d'écoulement du beurre et que la pression de celui-ci diminue, les parois de ces filières étant refroidies par des moyens de refroidissement ;
- des moyens de décristallisation dudit beurre cristallisé pour obtenir du beurre aisément tartinable.

Selon d'autres caractéristiques avantageuses et non limitatives de l'invention prises seules ou en combinaison :
- les épaulements présentent une section arrondie en coupe verticale longitudinale ;
- les moyens de refroidissement sont des canaux ménagés dans les parois des filières et à l'intérieur desquels circule un fluide de refroidissement ;
- les moyens d'amenée du beurre sont une vis sans fin ;
- les moyens de décristallisation sont des moyens de cisaillement mécanique ;
- ces moyens de décristallisation comprennent un rotor logé à l'intérieur d'un cylindre rotatif coaxial, ledit rotor comprenant un axe central rotatif muni de plusieurs étages d'au moins deux pales radiales s'étendant depuis cet axe jusqu'à une faible distance de la paroi intérieure dudit cylindre, ce cylindre étant muni de plusieurs étages d'au moins deux aubes radiales s'étendant depuis sa paroi intérieure jusqu'à une faible distance de l'axe dudit rotor, les étages de pales et d'aubes étant intercalés et positionnés à faible distance les uns des autres, le rotor et le cylindre tournant en sens contraire de façon à provoquer le cisaillement du beurre ;
- les aubes et les pales sont légèrement inclinées par rapport à un plan perpendiculaire à l'axe du rotor.

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
- la figure 1 est une vue schématique du dispositif d'amélioration de la tartinabilité du beurre conforme à l'invention,
- la figure 2 est une vue en perspective d'une plaque définissant les filières d'extrusion du dispositif précité,
- la figure 3 est une vue de détail de la zone mentionnée par la référence W sur la figure 1,
- la figure 4 est un schéma représentant les différents points de passage du beurre au travers du dispositif de cristallisation,
- la figure 5 est une vue de dessus du dispositif de décristallisation conforme à l'invention,
- la figure 6 est une vue schématique en coupe verticale d'une pale et d'une aube de ce dispositif,
- la figure 7 est une vue schématique en coupe axiale verticale de ce dispositif de décristallisation,
- et les figures 8 et 9 sont des courbes représentant respectivement l'évolution de la pression et de la température du beurre au cours du procédé conforme à l'invention.

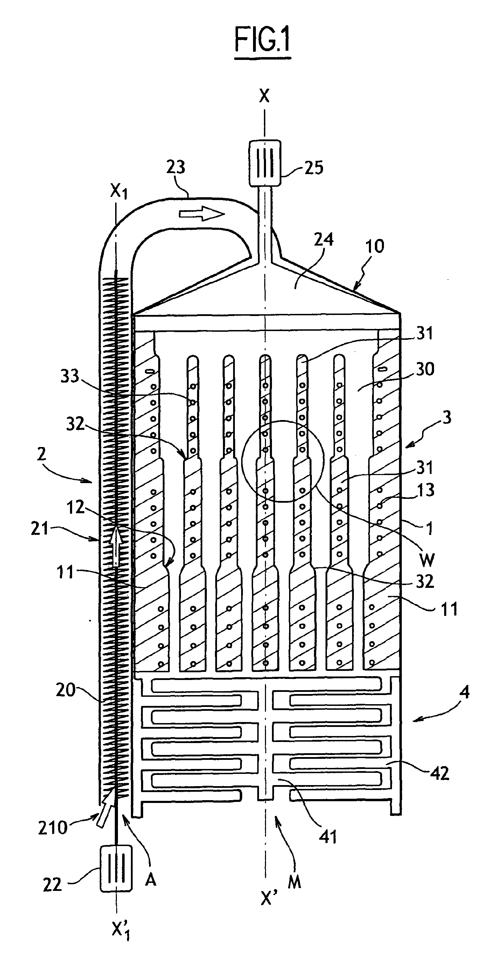

Comme on peut le voir sur la figure 1, le dispositif conforme à l'invention comprend une enceinte 1 s'étendant verticalement selon un axe longitudinal **X-X'.**

Cette enceinte 1 est alimentée en beurre normal (tel qu'il a été défini précédemment) au niveau de son extrémité supérieure ou amont, par des moyens 2 d'amenée et de compression du beurre.

Elle comprend successivement de haut en bas des moyens 3 de cristallisation accélérée du beurre et des moyens 4 de décristallisation de celui-ci.

Ces diverses parties constitutives du dispositif vont maintenant être décrites plus en détail.

Les moyens 2 comprennent une vis sans fin 20 s'étendant à l'intérieur d'un tube vertical 21 d'axe **X**_{**1**}**-X'**_{**1**} parallèle à l'axe **X-X'.**

La vis 20 est entraînée en rotation par un moteur 22, par exemple électrique. Elle permet l'amenée du beurre.

Dans le cas où le beurre normal introduit dans le dispositif a été obtenu à l'aide d'un butyrateur, l'entrée 210 de ce tube vertical peut être reliée directement à la sortie du butyrateur par tout raccord approprié.

Le tube vertical 21 se prolonge à sa partie supérieure par une portion de tube coudée 23 qui le relie à la partie supérieure 10 de l'enceinte 1.

Une hélice 24 entraînée en rotation par un moteur 25 est logée dans cette partie supérieure 10 de l'enceinte. Elle permet de comprimer le beurre et de le forcer dans les moyens de cristallisation 3.

Les moyens de cristallisation 3 comprennent une pluralité de canaux 30 ou filières d'extrusion délimitées par une série de plaques 31 érigées verticalement parallèlement les unes aux autres et dénommées ci-après « plaques filières ».

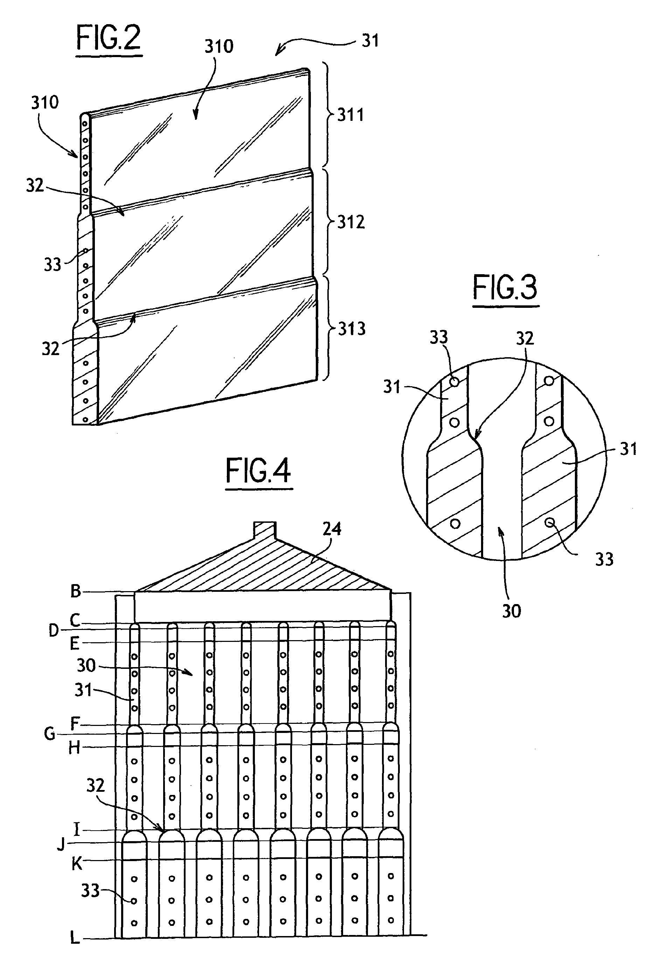

Comme cela apparaît mieux sur la figure 2, chaque plaque filière 31 présente sur ses deux faces latérales opposées 310, au moins un épaulement transversal 32 s'étendant horizontalement.

L'épaulement 32 de l'une des faces 310 est situé à la même hauteur que l'épaulement 32 se trouvant sur l'autre face opposée.

Sur l'exemple illustré sur la figure 2, la plaque filière 31 comporte deux épaulements 32 sur chacune de ses faces 310. La plaque 31 présente ainsi de haut en bas trois zones successives référencées 311, 312 et 313 dont l'épaisseur est croissante.

Comme on peut le voir sur la figure 1, les deux faces intérieures des parois latérales opposées 11 de l'enceinte 1 comportent également des épaulements transversaux horizontaux 12 situés en regard et donc à la même hauteur que les épaulements 32 des plaques 31.

L'aire de la section transversale horizontale de chaque filière 30, de forme sensiblement rectangulaire, décroît ainsi par paliers.

Le beurre qui traverse cette zone de décristallisation 3 est ainsi forcé à travers un passage qui se rétrécit par paliers.

Comme cela apparaît mieux sur la vue de détail de la figure 3, l'épaulement 32 présente une forme arrondie en section transversale verticale c'est-à-dire une forme exempte de recoins pour éviter tout risque de contamination bactérienne. Il pourrait également avoir la forme d'un biseau plat incliné vers le bas et l'intérieur de la filière 30.

En outre, chaque plaque filière 31 présente intérieurement, c'est à dire dans son épaisseur, une série de lumières ou canaux 33 horizontaux parallèles les uns aux autres et débouchant à ses deux extrémités.

Il en est de même pour les parois 11 de l'enceinte 1. Ces canaux sont référencés 13.

Le fluide de refroidissement utilisé est par exemple du dioxyde de carbone ou de l'azote liquide.

Sa circulation est assurée par exemple par une pompe ou un compresseur (non représentés sur les figures).

Les plaques filières 31 et les parois 11 sont réalisées dans un matériau bon conducteur thermique, de sorte que leur refroidissement entraîne celui du beurre qui circule dans les filières 30. De plus, l'enceinte 1 est isolée thermiquement de l'extérieur.

Selon une première variante de réalisation, le fluide de refroidissement est introduit d'un côté de l'enceinte 1 et circule en parallèle dans tous les canaux 13 ou 33 puis ressort de l'autre côté de l'enceinte où il est récupéré refroidi et recyclé dans le circuit.

Selon une seconde variante de réalisation, les différents canaux 13 et 33 sont reliés entre eux par des raccords appropriés de façon à définir un serpentin de circulation du fluide de refroidissement.

Dans ce cas, ce fluide est de préférence introduit à la base du dispositif de cristallisation 3 et ressort dans sa partie supérieure.

Ainsi, la circulation du fluide de refroidissement s'effectue à contre-courant de celle du beurre. L'échange de chaleur entre les parois 11 ou les plaques filières 31 et le beurre s'effectue progressivement. Le fluide cryogénique à basse température se réchauffe au fur et à mesure qu'il remonte le long des plaques 31 tandis que la température du beurre diminue au fur et à mesure qu'il descend au travers des filières 30.

Par ailleurs, on notera qu'il est également possible d'alimenter les trois zones 311, 312 et 313 de façon indépendante par des fluides de refroidissement qui sont introduits à des températures différentes.

Enfin, selon un mode de réalisation non représenté sur les figures, les plaques filières 31 peuvent être supprimées et remplacées par un unique bloc de matière percé d'une pluralité de filières verticales de section transversale circulaire, les épaulements 32 étant alors annulaires et le diamètre de ses filières diminuant du haut vers le bas à chaque épaulement.

La décristallisation du beurre est obtenue par un malaxeur placé à la sortie des filières 30.

Un exemple de réalisation de ce malaxeur est décrit ci-après.

Ce malaxeur référencé 4 comprend un rotor 41 logé à l'intérieur d'un cylindre rotatif 42. Le rotor 41 et le cylindre 42 sont coaxiaux.

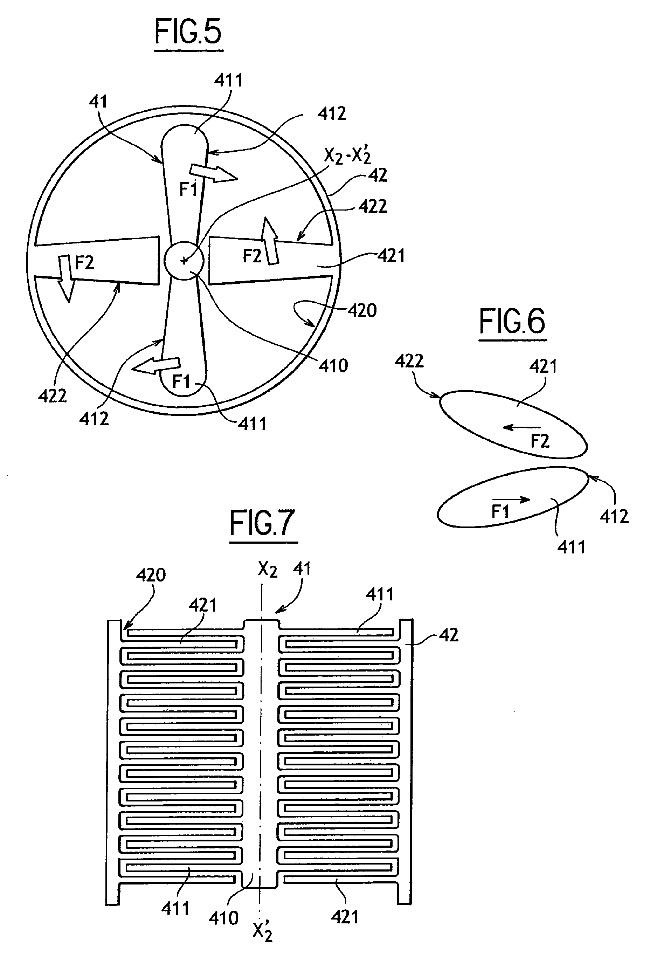

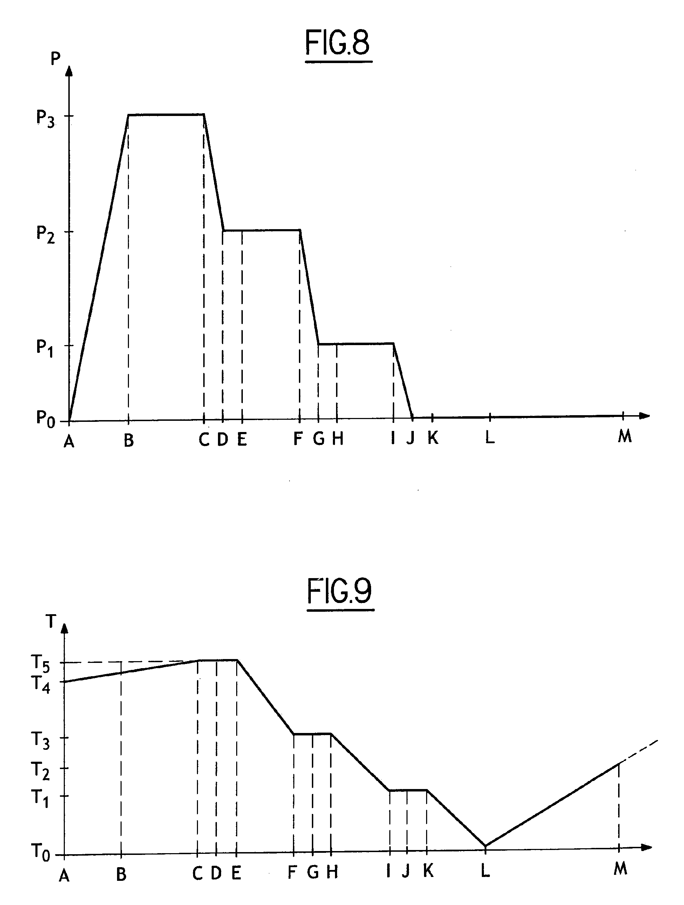

Comme cela apparaît mieux sur les figures 5 et 7, le rotor 41 présente un arbre central vertical 410 ou moyeu s'étendant selon un axe **X**_{**2**}**-X'**_{**2**} coaxial à l'axe **X-X'** de l'enceinte 1.

Cet arbre 410 est muni de plusieurs étages de deux pales radiales 411 diamétralement opposées s'étendant depuis l'axe 410 jusqu'à une faible distance de la paroi intérieure 420 du cylindre 42. Il serait également possible d'avoir trois pales 411 équidistantes ou plus à chaque étage.

Le cylindre rotatif 42 est muni de plusieurs étages de deux aubes radiales 421 diamétralement opposées s'étendant depuis sa paroi intérieure 420 jusqu'à une faible distance de l'axe 410 du rotor 41. Il serait également possible d'avoir à chaque étage trois aubes 421 équidistantes ou plus.

Le rotor 41 est monté à l'intérieur du cylindre 42 de façon que les étages de pales 411 et les étages d'aubes 421 soient intercalés.

L'écart entre les pales 411 d'un étage et les aubes 421 de l'étage suivant est faible.

De plus, le rotor 41 et le cylindre 42 sont entraînés en rotation à contre-sens par un moteur non représenté sur les figures, leurs sens de rotation respectifs étant représentés par les flèches **F**_{**1**} et **F**_{**2**}**.**

Grâce à cette disposition particulière, le beurre qui traverse le malaxeur 4 est soumis à un mouvement de cisaillement qui a pour effet de favoriser sa décristallisation et d'augmenter légèrement sa température.

En d'autres termes, le beurre subit une déformation due à l'application de deux forces parallèles agissant dans des directions opposées et exercées par la rotation en sens contraires du rotor 41 et du cylindre 42.

De préférence, pour favoriser l'évacuation du beurre vers l'extérieur du dispositif, c'est-à-dire vers le bas, les aubes 421 et les pales 411 sont légèrement inclinées par rapport à un plan horizontal perpendiculaire à l'axe **X**_{**2**}**-X'**_{**2**} du rotor.

Le bord d'attaque 422 de chaque aube 421 et celui 412 de chaque pale 411 sont inclinés vers le haut, (voir les figures 5 et 6).

Le cycle de modification de la pression et de la température que subit le beurre au cours du passage à travers le dispositif conforme à l'invention va maintenant être décrit en faisant référence aux figures 4, 8 et 9.

Le beurre effectue un parcours dont les différents points successifs ont été référencés de A à M.

Le point A correspond à l'orifice d'entrée 210 du tube 21, le point B à la base de l'hélice 24 et le point M à l'orifice de sortie du malaxeur 4 (voir figure 1).

Sur la figure 4, on peut voir que les points E, H et K d'une part et F, I et L d'autre part, correspondent respectivement à l'entrée et la sortie d'une zone de refroidissement. Le point C correspond à la partie supérieure des filières 30 et les points D, G et J à la base d'un épaulement 32.

Le beurre pénètre en A à une pression initiale Pₒ correspondant à celle de la pression atmosphérique (1.10⁵ Pa) et à une température initiale T₄ comprise entre 12 et 15 °C.

Le passage à travers la vis sans fin 20 provoque un léger échauffement du beurre et le passage à travers l'hélice 24 la compression de celui-ci de sorte qu'il atteint une température maximale T₅ comprise entre 13 et 18 °C et une pression maximale P₃ comprise entre 15 et 20.10⁵ Pa au niveau du point B. Cette pression reste constante jusqu'au point C.

Lorsque la masse de beurre s'écoule entre les points C et D, sa pression diminue pour atteindre la valeur P₂ comprise entre 8. 10⁵ et 12.10⁵ Pa, de préférence une valeur voisine de 10.10⁵ Pa puis reste constante entre les points D et F, puisque l'aire de la section transversale de la filière 30 est constante dans cette zone.

Entre les points C et E qui correspondent à une zone de la plaque 31 où il n' a pas de canaux de refroidissement 33, la température du beurre reste constante puis elle décroît entre les points E et F lors du passage dans la zone munie de canaux 33, pour atteindre une température intermédiaire T₃ comprise entre 2 et 8°C.

Entre les points F et H, la température du beurre reste constante.

Entre les points F et G, la masse de beurre rencontre un épaulement 32. En G, l'aire de la section transversale de la filière est restreinte, la pression diminue pour atteindre la valeur P₁ comprise entre 3. 10⁵ et 7.10⁵ Pa, de préférence voisine de 5.10⁵ Pa.

Les baisses de température et de pression se poursuivent par paliers jusqu'au point L conformément aux courbes des figures 8 et 9, jusqu'au retour à la pression P₀ initiale. La température intermédiaire T₁ est comprise entre -2 et -8°C, de préférence voisine de -5°C et la température de fin de cristallisation T₀ entre -12 et -20°C, de préférence voisine de -15°C.

Au point L, le beurre est cristallisé.

Dans le malaxeur 4, le beurre est décristallisé et réchauffé et les liaisons chimiques entre les acides gras sont rompues. Lorsque le beurre sort au point M à la pression atmosphérique P₀, sa température finale T₂ est comprise entre 0 et 5°C. Ce beurre est aisément tartinable, sa tartinabilité étant améliorée de 30 % environ par rapport à celle du beurre normal de départ.

A titre d'exemple purement illustratif, pour un dispositif dont la longueur de chaque zone 311, 312, 313 est voisine de 30 cm, l'écartement entre la base de deux plaques 31 contiguës est compris entre 0,5 et 2 cm et les épaulements sont d'une largeur de 0,1 à 2 mm, la vitesse de refroidissement du beurre est comprise entre 0,1 et 2°C/s.

Le procédé et le dispositif de l'invention permettent d'accélérer la cristallisation du beurre et de réaliser une étape de cristallisation définitive à chaque palier de baisse de température et/ou de pression.

Le procédé qui vient d'être décrit comprend trois paliers de cristallisation, à savoir de C à F, de F à I et de I à L. Ce procédé pourrait également être réalisé avec un seul palier ou plus de trois, le nombre d'épaulements 32 à l'intérieur des filières 30 étant adapté en conséquence.

Chaque palier permet de procéder à la cristallisation des acides gras dont le point de fusion se situe dans la plage de température correspondante. Ce sont les acides gras qui sont responsables de la texture du beurre dans le réfrigérateur.

A chaque palier, la cristallisation s'effectue en deux étapes. Lorsque le beurre subit une action mécanique due au passage d'un épaulement 32, les acides gras se réorganisent entre eux et ensuite lorsque le beurre est refroidi, les liaisons chimiques entre les acides gras se forment en conduisant à sa cristallisation.

## Revendications

1. Procédé de transformation en continu d'un beurre dit "normal" en beurre dont la tartinabilité est améliorée, dit "beurre aisément tartinable", **caractérisé en ce qu'**il comprend les étapes successives suivantes consistant à :
a) comprimer le beurre normal pour l'amener d'une pression initiale (P₀) à une pression maximale (P₃),
b) soumettre le beurre ainsi comprimé se trouvant à une température maximale (T₅) à une opération de cristallisation accélérée par diminution de sa pression et de sa température, pour l'amener à une pression finale (P₀) inférieure à la pression maximale (P₃) et à une température de fin de cristallisation (T₀) inférieure à ladite température maximale (T₅),
c) décristalliser ce beurre cristallisé par une action mécanique de façon à obtenir ledit beurre aisément tartinable à une température finale (T₂) supérieure à la température de fin de cristallisation (T₀).

2. Procédé selon la revendication 1, **caractérisé en ce que** la pression maximale (P₃) est comprise entre 15.10⁵ et 20.10⁵ Pa environ et la pression finale (P₀) entre 1. 10⁵ et 3.10⁵ Pa environ, la température maximale (T₅) est comprise entre 13 et 18°C environ et la température de fin de cristallisation (T₀) entre -12 et -20°C environ.

3. Procédé selon la revendication 1 ou 2, **caractérisé en ce que** la diminution de la pression et de la température du beurre au cours de l'étape b) de cristallisation accélérée comprend au moins un palier intermédiaire pendant lequel la température (T₁, T₃) dite "intermédiaire" et/ou la pression (P₁,P₂) dite "intermédiaire" sont constantes.

4. Procédé selon la revendication 3, **caractérisé en ce que** les paliers de pression intermédiaire constante (P₁,P₂) sont compris respectivement entre 8. 10⁵ et 12.10⁵ Pa et entre 3. 10⁵ et 7.10⁵ Pa et les paliers de température intermédiaire constante (T₁, T₃) sont respectivement compris entre 2 et 8°C et entre -2 et -8°C.

5. Procédé selon l'une quelconque des revendications précédentes, **caractérisé en ce que** l'étape c) de décristallisation est effectuée par cisaillement mécanique du beurre cristallisé.

6. Dispositif d'amélioration de la tartinabilité du beurre fonctionnant en continu, permettant la mise en oeuvre du procédé selon l'une quelconque des revendications 1 à 5, **caractérisé en ce qu'**il comprend :
- des moyens (2, 20, 24) d'amenée et de compression de beurre dit "normal" à l'intérieur d'un dispositif de cristallisation (3),
- des moyens (3) de cristallisation accélérée comprenant une pluralité de filières (30) d'extrusion du beurre dont les parois (31) présentent au moins un épaulement intérieur (32), de sorte que l'aire de la section transversale de chaque filière (30) diminue après chaque épaulement (32) par rapport au sens d'écoulement du beurre et que la pression de celui-ci diminue, les parois (31) de ces filières (30) étant refroidies par des moyens de refroidissement (33),
- des moyens (4) de décristallisation dudit beurre cristallisé pour obtenir du beurre aisément tartinable.

7. Dispositif selon la revendication 6, **caractérisé en ce que** les épaulements (32) présentent une section arrondie en coupe verticale longitudinale.

8. Dispositif selon la revendication 6 ou la revendication 7, **caractérisé en ce que** les moyens de refroidissement sont des canaux (33) ménagés dans les parois (31) des filières (30) et à l'intérieur desquels circule un fluide de refroidissement.

9. Dispositif selon l'une quelconque des revendications 6 à 8, **caractérisé en ce que** les moyens d'amenée du beurre (2) sont une vis sans fin.

10. Dispositif selon l'une des revendications 6 à 9, **caractérisé en ce que** les moyens de décristallisation (4) sont des moyens de cisaillement mécanique.

11. Dispositif selon la revendication 10, **caractérisé en ce que** les moyens de décristallisation (4) comprennent un rotor (41) logé à l'intérieur d'un cylindre rotatif coaxial (42), ledit rotor (41) comprenant un axe central rotatif (410) muni de plusieurs étages d'au moins deux pales radiales (411) s'étendant depuis cet axe jusqu'à une faible distance de la paroi intérieure (420) dudit cylindre (42), ce cylindre (42) étant muni de plusieurs étages d'au moins deux aubes radiales (421) s'étendant depuis sa paroi intérieure (420) jusqu'à une faible distance de l'axe (410) dudit rotor, les étages de pales et d'aubes étant intercalés et positionnés à faible distance les uns des autres, le rotor (41) et le cylindre (42) tournant en sens contraire de façon à provoquer le cisaillement du beurre.

12. Dispositif selon la revendication 11, **caractérisé en ce que** les aubes (421) et les pales (411) sont légèrement inclinées par rapport à un plan perpendiculaire à l'axe (410) du rotor (41).
